# EUROPÄISCHE PATENTANMELDUNG

(11) **EP 1 065 035 A2**
(43) Veröffentlichungstag der Anmeldung: **03.01.2001**
(21) Anmeldenummer: 00113130.9
(22) Anmeldetag: 29.06.2000
(51) Int. Cl.: B29C 45/72

(54) **Vorrichtung und Verfahren zum Handhaben eines Kunststofferzeugnisses**

(30) Priorität: 30.06.1999 DE 19929989; 29.12.1999 DE 19963572
(71) Anmelder: HEKUMA Herbst Maschinenbau GmbH, 85386 Eching (DE)
(72) Erfinder: Herbst, Richard, 85386 Eching (DE)
(74) Vertreter: Witte, Alexander, Dr.-Ing.

(57) **Zusammenfassung**

Es werden eine Vorrichtung und ein Verfahren zum Handhaben eines Kunststofferzeugnisses (16) bei oder nach dessen Entnahme aus einem Werkzeug (144) einer Kunststoff-Spritzgießmaschine beschrieben. Die Vorrichtung (10) besitzt Haltemittel (12, 80) zum Festhalten des Kunststofferzeugnisses (16) sowie Kühlmittel. (70 - 76, 90, 92) zum Kühlen eines ersten Oberflächenabschnitts (22, 28) davon. Dabei beinhalten die Haltemittel eine bevorzugt tubusartige Aufnahme (12) mit einer Innenwand (106), die das Kunststofferzeugnis (16) umgibt. Erfindungsgemäß halten die Haltemittel (12, 80) das Kunststofferzeugnis (16) mit einem definierten Freiraum (108) zwischen der Innenwand (106) und dem ersten Oberflächenabschnitt (22, 28). Des weiteren beinhalten die Kühlmittel (70 - 76, 90, 92) einen Mediumstrom (72), der in dem Freiraum (108) an dem ersten Oberflächenabschnitt (22, 28) entlang geführt ist.

## Beschreibung

Die vorliegende Erfindung betrifft eine Vorrichtung zum Handhaben eines Kunststofferzeugnisses bei oder nach dessen Entnahme aus einem Werkzeug einer Kunststoff-Spritzgießmaschine, mit Haltemitteln zum Festhalten des Kunststofferzeugnisses und mit Kühlmitteln zum Kühlen eines ersten Oberflächenabschnitts davon, wobei die Haltemittel eine Aufnahme mit einer Innenwand beinhalten, die das Kunststofferzeugnis umgibt.

Die Erfindung betrifft des weiteren ein entsprechendes Verfahren mit den Schritten:
- Festhalten des Kunststofferzeugnisses in einer Aufnahme mit einer Innenwand, die das Kunststofferzeugnis umgibt, und
- Kühlen eines ersten Oberflächenabschnitts des Kunststofferzeugnisses mit Kühlmitteln.

Eine solche Vorrichtung und ein solches Verfahren sind aus der EP 0 266 804 B1 bekannt.

In dieser Druckschrift ist eine Vorrichtung zum Halten und Kühlen eines noch warmen Vorformlings beschrieben, der in der Fachterminologie auch als Preform bezeichnet wird. Hierbei handelt es sich um ein Kunststofferzeugnis, das als Zwischenprodukt bei der Herstellung von Kunststoffflaschen und ähnlichem verwendet wird. Die Preform wird zunächst in an sich bekannter Weise mit Hilfe einer Kunststoff-Spritzgießmaschine hergestellt und später in einem nachfolgenden Verarbeitungsschritt durch Aufblasen zu einer Kunststoffflasche umgeformt.

Die bekannte Vorrichtung besitzt zum Halten und Kühlen der Preform eine tubusartige Aufnahme, in die jeweils eine zunächst noch warme Preform durch Ansaugen hineingezogen wird. Die Aufnahme besitzt Kanäle für eine Kühlflüssigkeit, und sie ist derart dimensioniert, daß die seitlichen Außenflächen einer aufgenommenen Preform in direktem Kontakt an den seitlichen Innenflächen der Aufnahme anliegen. Durch den Kontakt mit der gekühlten Aufnahme werden die seitlichen Flächen der Preform gekühlt. Die bekannte Vorrichtung ist jedoch wenig flexibel, da sie stets exakt an die Form der Kunststofferzeugnisse angepaßt sein muß. Außerdem können sich in Abhängigkeit von der jeweiligen Form Schwierigkeiten bei der Entnahme der Kunststofferzeugnisse aus der Aufnahme ergeben. Schließlich werden bei dieser bekannten Vorrichtung einzelne Bereiche der Kunststofferzeugnisse, wie bspw. das Gewinde der Preform, nicht gekühlt.

Aus der DE 195 36 868 A1 ist es bekannt, CD-Hüllen aus Kunststoff nach ihrer Entnahme aus einer Kunststoff-Spritzgießmaschine mit Hilfe eines Luftstroms zu kühlen. Die Kunststofferzeugnisse werden dabei von einem Greifwerkzeug an ein Kühlband übergeben, das über den Luftaustritt eines Gebläses geführt ist. Das Kühlband ist Bestandteil einer Kühlstation, die dem Entnahmewerkzeug zum Entformen der Kunststofferzeugnisse nachgeordnet ist. Dies funktioniert bei vergleichsweise dünnwandigen Kunststofferzeugnissen wie CD-Hüllen recht gut, da diese schnell erkalten. Bei dickwandigen Kunststofferzeugnissen, wie bspw. Cremedosen für die Kosmetikindustrie, die nur langsam bis ins Innere durchkühlen, können sich bei einer solch einfachen Vorrichtung jedoch Schwierigkeiten ergeben. Insbesondere besteht die Gefahr, daß die bereits erstarrte Außenfläche der Cremedose bei dem Transport zu der Kühlstation durch den heißen Kern von innen wieder angeschmolzen wird.

Es ist daher eine Aufgabe der vorliegenden Erfindung, eine alternative Vorrichtung sowie ein entsprechendes Verfahren anzugeben, die bei einer verbesserten Flexibilität gerade zum Kühlen von dickwandigen Kunststofferzeugnissen sehr gut geeignet sind.

Diese Aufgabe wird bei einer Vorrichtung der eingangs genannten Art dadurch gelöst, daß die Haltemittel das Kunststofferzeugnis mit einem definierten Freiraum zwischen der Innenwand und dem ersten Oberflächenabschnitt halten und daß die Kühlmittel einen Mediumstrom beinhalten, der in dem Freiraum an dem ersten Oberflächenabschnitt entlang geführt ist.

Die Aufgabe wird des weiteren durch ein Verfahren der eingangs genannten Art gelöst, bei dem das Kunststofferzeugnis mit einem definierten Freiraum zwischen der Innenwand und dem ersten Oberflächenabschnitt gehalten wird und bei dem in dem Freiraum ein Mediumstrom an dem ersten Oberflächenabschnitt entlang geführt wird.

Die erfindungsgemäße Vorrichtung unterscheidet sich von der bekannten Vorrichtung der EP 0 266 804 B1 vor allem dadurch, daß der zu kühlende erste Oberflächenabschnitt ohne direkten Kontakt mit einer Kühlfläche gehalten werden kann. Da die Kühlmittel demzufolge nicht mehr exakt an die Form der zu kühlenden Kunststofferzeugnisse angepaßt sein müssen, ergeben sich vielfältigere und flexiblere Konstruktions- und Einsatzmöglichkeiten. Gleichzeitig kann mit Hilfe des Mediumstroms, der ein Flüssigkeitsstrom oder ein Gasstrom sein kann, auf sehr effiziente Weise eine hervorragende Kühlwirkung erreicht werden. Hierzu trägt besonders die Verwendung der bevorzugt tubusartigen Aufnahme bei, da durch den definierten Abstand zwischen der Innenwand und dem ersten Oberflächenabschnitt definierte Strömungsverhältnisse erreicht werden können. Infolgedessen ist es möglich, die Stärke und den Verlauf des Mediumstroms den jeweiligen Erfordernissen sehr exakt anzupassen.

Darüber hinaus bietet der Mediumstrom den Vorteil, daß die Intensität der Kühlung sehr einfach und mit einer sehr schnellen Reaktionszeit variiert werden kann, indem beispielsweise die Geschwindigkeit und/oder die Temperatur des Stroms verändert wird. Insbesondere ist es durch Ein- bzw. Abschalten des Mediumstroms möglich, die Kühlwirkung der Vorrichtung abrupt ein- bzw. auszuschalten, ohne das Kunststofferzeugnis selbst zu bewegen.

Schließlich kann die erfindungsgemäße Vorrichtung sehr gut in ein Entnahmewerkzeug zum Entformen der Kunststofferzeugnisse aus der Kunststoff-Spritzgießmaschine oder in das Werkzeug der Spritzgießmaschine selbst integriert werden, so daß die Kunststofferzeugnisse bereits bei oder unmittelbar nach ihrer Entnahme aus dem Formhohlraum der Spritzgießmaschine gekühlt werden können. Dies ist aus den oben bereits erläuterten Gründen vor allem bei dickwandigen Kunststofferzeugnissen sehr vorteilhaft.

Hinzu kommt, daß die Kunststofferzeugnisse in der Aufnahme während der Kühlung und damit bis zur endgültigen Aushärtung sehr gut gegen äußere Einflüsse und Beschädigungen geschützt sind.

Insgesamt ist die zuvor genannte Aufgabe daher vollständig gelöst.

In einer Ausgestaltung der Erfindung weisen die Kühlmittel der Vorrichtung eine Überdruckeinheit auf, von der aus der Mediumstrom mit Überdruck an dem ersten Oberflächenabschnitt entlangströmt. Bei dem erfindungsgemäßen Verfahren dieser Ausgestaltung wird der Mediumstrom daher mit Überdruck an dem ersten Oberflächenabschnitt entlanggeführt.

Alternativ zu dieser Maßnahme ist es auch möglich, den Mediumstrom durch Ansaugen, d.h. mit Hilfe eines Unterdrucks, an dem ersten Oberflächenabschnitt vorbeizuführen. Wenn als Kühlmedium jedoch beispielsweise Luft verwendet wird, kann mit Hilfe eines Unterdrucks maximal eine Druckdifferenz von 1 bar erzeugt werden. Tatsächlich wird die erreichbare Druckdifferenz noch geringer sein, da es technisch nicht möglich ist, ein vollständiges Vakuum zu erzeugen.

Demgegenüber besitzt diese Ausgestaltung der Erfindung den Vorteil, daß auch höhere Druckdifferenzen erzeugt werden können. In einer besonders bevorzugten Ausgestaltung wird der erste Oberflächenabschnitt beispielsweise mit einem Überdruck von bis zu etwa 7 bar mit Luft angeblasen. Hierdurch kann bei gleichen geometrischen Verhältnissen eine größere Wärmemenge abgeführt als bei Verwendung eines Unterdrucks. Zudem vergrößert sich auch die Variationsbreite, innerhalb der die Intensität der Kühlung variiert werden kann.

In einer weiteren Ausgestaltung der zuvor genannten Maßnahme umgibt die Aufnahme das Kunststofferzeugnis vollständig.

Diese Maßnahme besitzt den Vorteil, daß die Strömungsverhältnisse rund um das Kunststofferzeugnis definiert sind, was eine sehr effiziente und definierte Kühlung ermöglicht. Darüber hinaus ist das zunächst noch warme und daher leicht verformbare Kunststofferzeugnis auf diese Weise vor äußeren Einwirkungen und Beschädigungen besonders gut geschützt.

Besonders vorteilhaft ist es, wenn die Aufnahme jeweils nur ein einzelnes Kunststofferzeugnis umgibt.

In diesem Fall können nämlich die Strömungsverhältnisse sehr exakt auf das eine Kunststofferzeugnis angepaßt werden, so daß eine individuelle und damit optimale Kühlung möglich ist.

In einer weiteren Ausgestaltung weist die erfindungsgemäße Vorrichtung eine Abstandsregelung zum Einstellen der Größe des Freiraums auf.

Die Maßnahme besitzt den Vorteil, daß die Strömungsverhältnisse an Veränderungen der Kunststofferzeugnisse leicht angepaßt werden können. Veränderungen ergeben sich beispielsweise dadurch, daß sehr heiße Kunststofferzeugnisse aufgrund ihrer Abkühlung schrumpfen. Darüber hinaus können die Strömungsverhältnisse hier sehr leicht an unterschiedliche Kunststofferzeugnisse angepaßt werden. Insgesamt wird hierdurch die Effizienz und Flexibilität nochmals gesteigert.

In einer weiteren Ausgestaltung der Erfindung weist die Aufnahme bewegliche Sperrelemente auf, um das Kunststofferzeugnis gegen ein Herausbewegen aus der Aufnahme zu sichern.

Bevorzugt sind die Sperrelemente radial zur Längsmittelachse der Aufnahme beweglich. Die Maßnahme ist besonders vorteilhaft, wenn der Mediumstrom mit Überdruck in Richtung eines Endes der Aufnahme gegen das Kunststofferzeugnis geblasen wird, da in diesem Fall eine Beschädigung des Kunststofferzeugnisse mit konstruktiv sehr einfachen Mitteln verhindert ist.

In einer weiteren Ausgestaltung der Erfindung weist die Aufnahme Leitmittel auf, um den Mediumstrom zu einem zweiten Oberflächenabschnitt des Kunststofferzeugnisses weiterzuleiten.

Diese Maßnahme ist besonders vorteilhaft, wenn das Kunststofferzeugnis eine becherartige Form besitzt, wie dies vor allem bei Cremedosen für die Kosmetikindustrie der Fall ist. Bei derartigen Kunststofferzeugnissen ist es aufgrund der genannten Maßnahme möglich, den Mediumstrom zunächst an der Außenseite der Cremedose vorbeizuführen und anschließend in den Innenbereich der Cremedose weiterzuführen. Infolgedessen ist es möglich, mit nur einem Mediumstrom mehrere, versetzt zueinander liegende Oberflächenabschnitte eines oder sogar mehrerer Kunststofferzeugnisse zu kühlen. Dabei ist die Weiterleitung des Mediumstroms mit Hilfe von Leitmitteln konstruktiv einfach.

In einer weiteren Ausgestaltung der Erfindung weist die Vorrichtung Mittel auf, die den Mediumstrom verwirbeln. Dementsprechend wird der Mediumstrom bei dieser Ausgestaltung des erfindungsgemäßen Verfahrens verwirbelt.

Derartige Mittel sind bevorzugt vorspringende Elemente, die an der Innenwand der Aufnahme angeordnet sind und die den Mediumstrom daher "behindern". Alternativ oder ergänzend hierzu kann die Innenwand der Aufnahme eine strukturierte Oberfläche aufweisen. Schließlich kann der Mediumstrom bereits verwirbelt in die Aufnahme eingeleitet werden. Die Maßnahme besitzt den Vorteil, daß das Wärmeaufnahmevermögen des Stroms und damit die Effizienz der Kühlwirkung verbessert wird.

In einer weiteren Ausgestaltung der Erfindung sind an der Innenwand der Aufnahme Elemente angeordnet, die das aufgenommene Kunststofferzeugnis in einer vorgegebenen Position stabilisieren.

Diese Maßnahme besitzt den Vorteil, daß ein unkontrolliertes "Tanzen" des Kunststofferzeugnisses in dem Mediumstrom sowie daraus folgende Beschädigungen vermieden werden. Die genannten Elemente sind bevorzugt Zapfen, Schienen oder Vorsprünge. Besonders vorteilhaft ist es, wenn die Elemente zudem die Wirkung haben, den Mediumstrom zu verwirbeln.

In einer weiteren Ausgestaltung der Erfindung weist die Aufnahme definierte Züge auf, die den Mediumstrom spiralförmig um das Kunststofferzeugnis herumleiten.

Diese Maßnahme besitzt den Vorteil, daß die zurückzulegende Wegstrecke für den Mediumstrom im Kontakt mit dem ersten Oberflächenabschnitt verlängert ist. Hierdurch wird die Möglichkeit für einen Wärmeübergang von dem ersten Oberflächenabschnitt zu dem Mediumstrom und damit die Effizienz der Kühlung verbessert. Ganz besonders vorteilhaft ist es, wenn die definierten Züge so ausgestaltet sind, daß das Kunststofferzeugnis in eine Eigenrotation versetzt wird. In diesem Fall erhält das Kunststofferzeugnis nämlich eine sehr stabile Lage innerhalb der Aufnahme, ohne daß sich in der außenseitigen Oberfläche des Kunststofferzeugnisses Andruckpunkte abzeichnen können. Des weiteren wird in diesem Fall die Gleichmäßigkeit der Kühlung nochmals verbessert.

In einer weiteren Ausgestaltung ist die erfindungsgemäße Vorrichtung Teil eines Entnahmewerkzeugs zum Entformen des Kunststofferzeugnisses aus einem Formhohlraum der Kunststoff-Spritzgießmaschine. Dementsprechend wird das Kunststofferzeugnis bei dem erfindungsgemäßen Verfahren beim Entformen aus dem Formhohlraum der Kunststoff-Spritzgießmaschine gekühlt.

Um die Zykluszeit einer Spritzgießmaschine zu verkürzen und damit die Produktionsleistung zu erhöhen, ist es von Vorteil, wenn die hergestellten Kunststofferzeugnisse möglichst schnell aus dem Werkzeug der Spritzgießmaschine entformt werden können. Hierbei besteht jedoch häufig die Gefahr, daß die bereits erstarrte Außenhaut eines gerade hergestellten Kunststofferzeugnisses durch den noch heißen inneren Kern von innen her wieder anschmilzt, so daß das Kunststofferzeugnis seine vorgegebene Form verliert. Ein derartiges Anschmelzen wird mit der genannten Maßnahme vermieden, so daß die hergestellten Kunststofferzeugnisse bereits nach sehr kurzer Zeit aus dem Formhohlraum der Spritzgießmaschine entformt werden können. Insgesamt besitzt die genannte Maßnahme daher den Vorteil, daß die Zykluszeit einer Kunststoff-Spritzgießmaschine bei gleichbleibender Qualität der Kunststofferzeugnisse reduziert werden kann.

In einer alternativen Ausgestaltung ist die Aufnahme Teil eines Formhohlraums einer Kunststoff-Spritzgießmaschine.

Auch in diesem Fall kann das Kunststofferzeugnis sehr schnell nach dem Spritzgießvorgang gekühlt werden, da die Kühlung bereits in dem Formhohlraum des Formwerkzeugs beginnen kann.

Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine Vorrichtung gemäß einem ersten Ausführungsbeispiel der Erfindung,
- Fig. 2: eine Ansicht der Vorrichtung aus Fig. 1 entlang der Linie II-II,
- Fig. 3: eine Vorrichtung gemäß einem zweiten Ausführungsbeispiel der Erfindung,
- Fig. 4: eine Vorrichtung gemäß einem dritten Ausführungsbeispiel der Erfindung und
- Fig. 5: eine Vorrichtung gemäß einem vierten Ausführungsbeispiel der Erfindung.

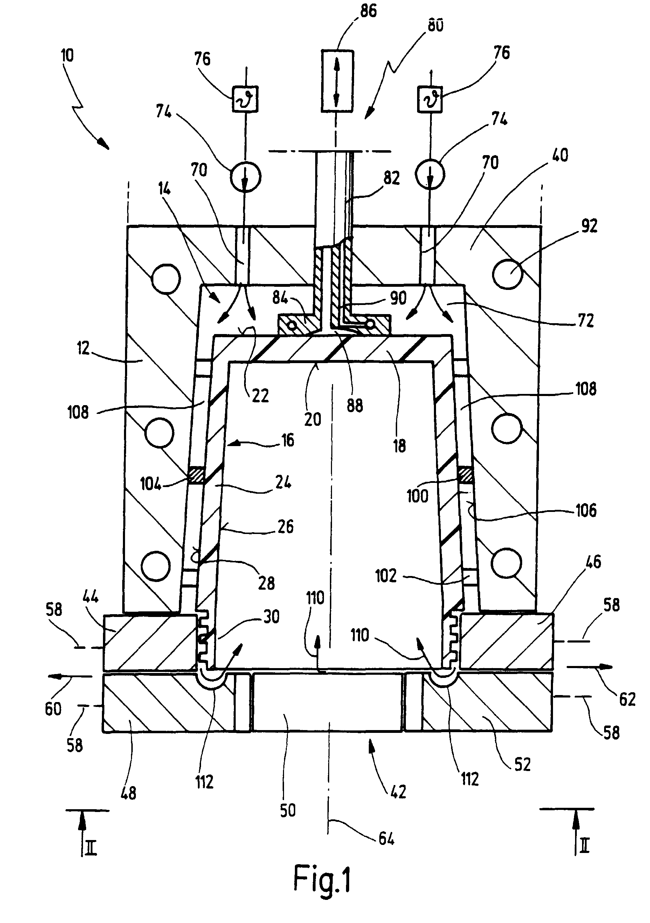

In Fig. 1 ist eine erfindungsgemäße Vorrichtung in ihrer Gesamtheit mit der Bezugsziffer 10 bezeichnet.

Die Vorrichtung 10 besitzt eine tubusartige Aufnahme 12 mit einem sich konisch verjüngenden Innenraum 14. In dem Innenraum 14 ist ein Kunststofferzeugnis 16 aufgenommen und gehalten, bei dem es sich hier beispielhaft um eine Cremedose handelt. Die genannte tubusartige Formgebung ist dabei nur beispielhaft zu verstehen.

Die konische Verjüngung des Innenraums 14 ist hier beispielhaft gezeigt und besitzt den Vorteil, daß die Cremedose 16 leichter in die Aufnahme 12 eingeführt werden kann. Der Innenraum 14 kann im Gegensatz zu bisher bekannten Vorrichtungen jedoch auch eine andere Form aufweisen.

Die Cremedose 16 besitzt einen Boden 18 mit einer Innenseite 20 und einer Außenseite 22 sowie eine Seitenwand 24 mit einer Innenseite 26 und einer Außenseite 28. Im Bereich ihrer Öffnung weist die Cremedose 16 einen Gewindeabschnitt 30 auf, auf den beim späteren Gebrauch ein Deckel aufgeschraubt werden kann. Der Gewindeabschnitt 30 besitzt einen geringfügig kleineren Außendurchmesser als der benachbart liegende Bereich der Seitenwand 24, wodurch ein Vorsprung gebildet ist, der zum Festhalten der Cremedose 16 innerhalb der Aufnahme 12 verwendet werden kann.

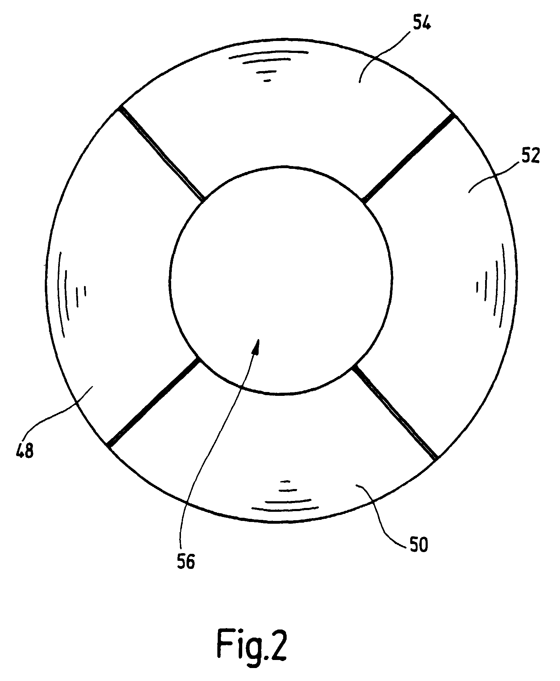

Die tubusartige Aufnahme 12 ist an ihrem in Fig. 1 oben liegenden Ende mit einem Boden 40 abgeschlossen. Dem Boden 40 gegenüber besitzt die Aufnahme 12 eine Einführöffnung 42, durch die die Cremedose 16 in den Innenraum 14 der Aufnahme 12 eingebracht bzw. entnommen werden kann. Im Bereich der Einführöffnung 42 sind um den Umfang der Aufnahme 12 verteilt erste Sperrelemente 44, 46 sowie zweite Sperrelemente 48, 50, 52 und 54 angeordnet. Das zweite Sperrelement 54 ist aufgrund der Querschnittsdarstellung in Fig. 1 nur in der Draufsicht gemäß Fig. 2 zu erkennen.

Wie in Fig. 2 ebenfalls zu erkennen ist, verschließen die Sperrelemente 44 bis 54 die Einführöffnung 42 der Aufnahme 12 nicht vollständig, sondern es verbleibt eine Öffnung 56, durch die Luft oder ein anderes Kühlmedium aus dem Innenraum 14 der Aufnahme 12 heraustreten kann.

Die Sperrelemente 44 bis 54 sind mit Hilfe von Antrieben 58, die hier nur schematisch dargestellt sind, in Richtung der Pfeile 60, 62, d.h. radial zur Längsmittelachse 64 der Aufnahme 12, bewegbar. In der in Fig. 1 dargestellten Situation befinden sich die Sperrelememte 44 bis 54 in einer Position, in der sie die Cremedose 16 gegen ein Herausfallen aus der Aufnahme 12 sichern. Dabei greifen die ersten Sperrelemente 44, 46 am Außenumfang des Gewindeabschnitts 30 der Cremedose 16 an, während die zweiten Sperrelemente 48 bis 54 radial über den Gewindeabschnitt 30 überstehen. Insgesamt wird die Einführöffnung 42 hierdurch so weit verkleinert, daß die Cremedose 16 aus dem Innenraum 14 der Aufnahme 12 nicht herausfallen kann.

Mit der Bezugsziffer 70 sind zwei Einlässe für ein Kühlmedium bezeichnet, die im Boden 40 der Aufnahme 12 angeordnet sind. Als Kühlmedium wird in dem vorliegenden Ausführungsbeispiel Luft verwendet. Alternativ könnte als Kühlmedium jedoch auch ein anderes Gas oder eine Flüssigkeit, insbesondere Wasser, verwendet werden.

Die Kühlluft strömt mit Überdruck durch die Einlässe 70 in Richtung der Pfeile 72 in den Innenraum 14 der Aufnahme 12 ein.

Der Überdruck wird im vorliegenden Ausführungsbeispiel mit Hilfe zweier Druckluftkompressoren 74 erzeugt, die die Umgebungsluft der Vorrichtung 10 ansaugen und verdichten. Die Verwendung zweier Druckluftkompressoren 74 ist hier wiederum nur beispielhaft zu verstehen. Alternativ kann ein beliebiges Kühlmedium beispielsweise zunächst in einem gemeinsamen Überdruckreservoir verdichtet werden, um anschließend durch einen oder mehrere Einlässe 70 in den Innenraum 14 der Aufnahme 12 einzuströmen.

Gemäß einer bevorzugten Ausführung der Erfindung besitzt die Vorrichtung 10 ferner eine Temperatursteuerung 76, mit der die angesaugte und verdichtete Kühlluft selbst auf einen vorgegebenen Temperaturwert gebracht wird.

Des weiteren ist im Bereich des Bodens 40 der Aufnahme 12 eine Greifeinrichtung 80 angeordnet, mit der die Cremedose 16 in den Innenraum 14 der Aufnahme 12 hineingezogen werden kann. Die Greifeinrichtung 80 weist im vorliegenden Fall eine Stange 82 mit einer endseitigen Bodenplatte 84 auf, die in den Innenraum 14 der Aufnahme 12 hineinragt. Die Stange 82 ist über einen Antrieb 86 parallel zur Längsmittelachse 64 der Aufnahme 12 bewegbar. Die Bodenplatte 84 weist an ihrem Ende eine Unterdruckkammer 88 auf, so daß die Cremedose 16 an ihrem Boden 18 von der Greifeinrichtung 80 angesaugt und gehalten werden kann.

In Verbindung mit dem konisch sich verjüngenden Innenraum 14 ist die Greifeinrichtung 80 in der Lage, den Abstand der Cremedose 16 zu den Innenseiten der Aufnahme zu regeln.

Mit der Bezugsziffer 90 ist ein Kanalsystem bezeichnet, das die Stange 82 sowie die Bodenplatte 84 der Greifeinrichtung 80 durchzieht. In dem Kanalsystem 90 kann eine Kühlflüssigkeit zirkulieren, um die Greifeinrichtung 80 selbst ebenfalls zu kühlen. Ein vergleichbares Kanalsystem, das mit der Bezugsziffer 92 bezeichnet ist, durchzieht ferner die Seitenwände der tubusartigen Aufnahme 12. Mit Hilfe der Kanalsysteme 90, 92 kann die Kühlwirkung der Vorrichtung 10 insgesamt verbessert werden. Je nach der abzuführenden Wärmemenge der Cremedose 16 sind die Kanalsysteme 90, 92 jedoch nicht unbedingt erforderlich.

Mit den Bezugsziffern 100, 102 und 104 sind beispielhaft einzelne Zapfen bezeichnet, die entlang der Innenwand 106 der tubusartigen Aufnahme 12 verteilt sind. Die Zapfen 100 bis 104 sind versetzt zueinander angeordnet und derart bemessen, daß sie an die Außenseite 28 der Cremedose 16 so weit heranreichen, daß sie diese in ihrer Lage stabilisieren. Zwischen der Außenseite 28 der Cremedose 16 und der Innenwand 106 der Aufnahme 12 verbleibt dabei ein Freiraum 108, in dem die Kühlluft entlangströmen kann. Die Zapfen 100 bis 104 können auch radial beweglich sein, so daß deren Position an unterschiedliche Cremedosen 16 angepaßt werden kann.

Die Funktionsweise der Vorrichtung 10 ist nun wie folgt:

Zunächst wird die Cremedose 16 mit Hilfe der Greifeinrichtung 80 aufgenommen und in den Innenraum 14 der Aufnahme 12 hineingezogen. Anschließend werden die Sperrelemente 44 bis 54 in die in Fig. 1 dargestellte Position gebracht, so daß die Cremedose 16 selbst dann nicht aus der Aufnahme 12 herausfallen kann, wenn sie sich von der Bodenplatte 84 der Greifeinrichtung 80 löst. Nun wird zum Kühlen der Cremedose 16 Kühlluft unter einem Druck von etwa 6 bar durch die Einlässe 70 in den Innenraum 14 der Aufnahme 12 geblasen. Die Kühlluft strömt an den Außenseiten 22, 28 der Cremedose 16 entlang nach unten und nimmt dabei Wärmeenergie von der Cremedose 16 auf. Durch die Zapfen 100 bis 104 wird die Kühlluft in dem Freiraum 108 verwirbelt.

Im Bereich der Einführöffnung 42 wird die Kühlluft durch die zweiten Sperrelemente 48 bis 54 in Richtung der Pfeile 110 in den Innenraum der Cremedose 16 umgeleitet. Die zweiten Sperrelemente 48 bis 54 weisen hierzu eine entsprechende Vertiefung 112 auf.

Durch die Umleitung werden auch die Innenseiten 20, 26 der Cremedose 16 gekühlt. Anschließend tritt die erwärmte Kühlluft durch die Öffnung 56 aus dem Innenraum 14 der Aufnahme 12 aus. Aufgrund der im Bereich der Öffnung 56 entgegengesetzten Luftströmungen entstehen dabei nochmals Verwirbelungen, durch die die Kühlwirkung der Vorrichtung 10 auch im Innenraum der Cremedose 16 verbessert wird. Außerdem wird der Anpreßdruck des Gewindeabschnitts 30 auf die Sperrelemente 44 bis 54 vermindert, wodurch Druckstellen an der Cremedose 16 reduziert werden.

Bei der nachfolgenden Beschreibung der weiteren Ausführungsbeispiele bezeichnen gleiche Bezugszeichen die gleichen Elemente wie in den Figuren 1 und 2.

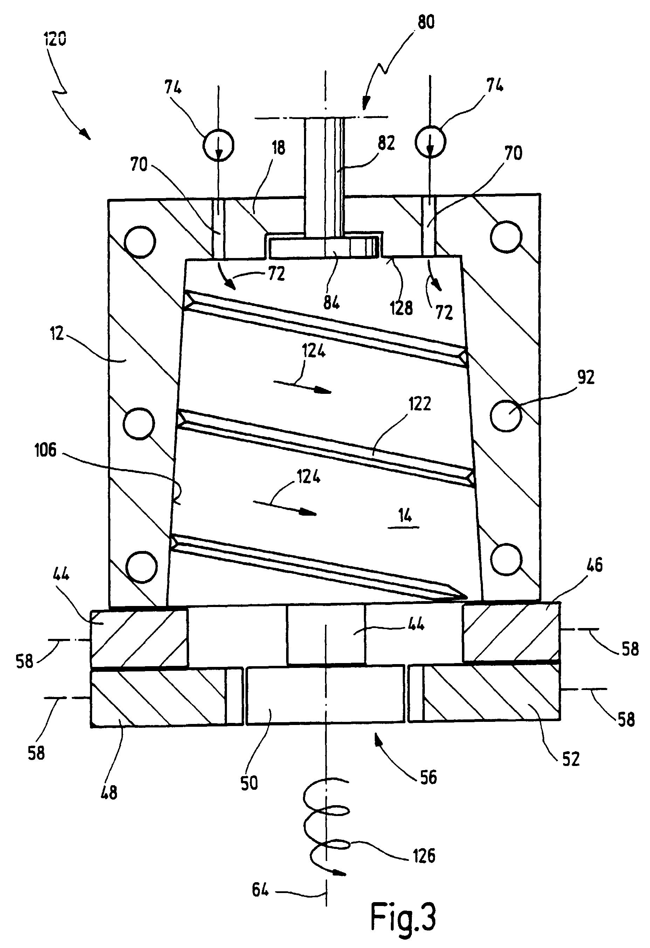

In Fig. 3 ist eine Vorrichtung gemäß einem zweiten Ausführungsbeispiel der Erfindung in ihrer Gesamtheit mit der Bezugsziffer 120 bezeichnet. Die Vorrichtung 120 unterscheidet sich von der Vorrichtung 10 gemäß Fig. 1 vor allem durch den Zug 122 anstelle der Zapfen 100 bis 104. Zur besseren Erkennbarkeit ist die Vorrichtung 120 in Fig. 3 ohne ein Kunststofferzeugnis in dem Innenraum 14 dargestellt. Infolgedessen ist hier auch ein weiteres erstes Sperrelement erkennbar, das der Einfachheit halber ebenfalls mit der Bezugsziffer 44 bezeichnet ist.

Der Zug 122 verläuft bei der Vorrichtung 120 an der Innenwand 106 der Aufnahme 12 entlang einer durchgehenden, spiralförmigen Bahn. Dies hat zur Folge, daß die in Richtung der Pfeile 72 einströmende Kühlluft sich ebenfalls entlang einer solchen spiralförmigen Bahn um ein aufgenommenes Kunststofferzeugnis herum bewegt, was durch die Pfeile 124 und 126 angedeutet ist. Insgesamt wird der Laufweg eines einzelnen Luftteilchens im Kontakt mit dem zu kühlenden Oberflächenabschnitt 22, 28 des Kunststofferzeugnisses dadurch länger, so daß für das Luftteilchen mehr Zeit zur Verfügung steht, um Wärmeenergie von dem Kunststofferzeugnis aufzunehmen.

Ein weiterer Unterschied der Vorrichtung 120 im Vergleich zu der Vorrichtung 10 ist, daß das zu kühlende Kunststofferzeugnis bei der Vorrichtung 120 innerhalb der Aufnahme 12 nicht mehr von der Greifeinrichtung 80 festgehalten wird. Dementsprechend kann die Greifeinrichtung 80 bei der Vorrichtung 120 in eine Ruheposition zurückgefahren werden, bei der die Unterseite der Bodenplatte 84 bündig mit der Innenseite 128 des Bodens 18 der Aufnahme 12 abschließt. Das zu kühlende Kunststofferzeugnis wird bei der Vorrichtung 120 allein durch die Sperrelemente 44 bis 54 gehalten, gegen die es aufgrund der einströmenden Kühlluft gedrückt wird. Durch die spiralförmige Strömung der Kühlluft gemäß dem Pfeil 126 kann ein aufgenommenes Kunststofferzeugnis dabei in eine Eigenrotation versetzt werden, was zur Folge hat, daß das Kunststofferzeugnis in einer "schwebenden" Position innerhalb der Aufnahme 12 stabilisiert wird.

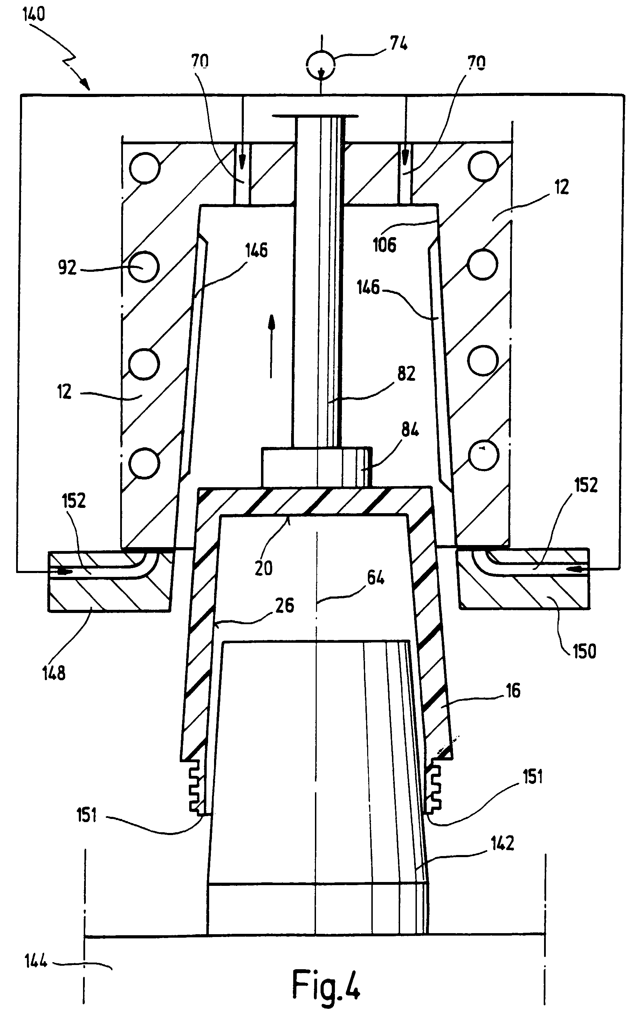

In Fig. 4 ist ein weiteres Ausführungsbeispiel einer erfindungsgemäßen Vorrichtung in seiner Gesamtheit mit der Bezugsziffer 140 bezeichnet. Die Vorrichtung 140 ist Teil eines Entnahmewerkzeugs zum Entformen eines Kunststofferzeugnisses aus dem Formhohlraum einer Kunststoff-Spritzgießmaschine. Als Kunststofferzeugnis ist hier wiederum beispielhaft die Cremedose 16 dargestellt.

In der in Fig. 4 dargestellten Situation wird die Cremedose 16 gerade von einem Kern 142 abgezogen, der auf einer Werkzeughälfte 144 der hier nicht näher dargestellten Kunststoff-Spritzgießmaschine angeordnet ist. Zum Spritzgießen der Cremedose 16 ragt der Kern 142 in das Formnest einer hier nicht dargestellten zweiten Werkzeughälfte, wobei die beiden Werkzeughälften in an sich bekannter Weise gemeinsam den Formhohlraum für die Cremedose 16 bilden.

Abweichend von der hier gezeigten Darstellung kann die Cremedose 16 auch mit einem Abstreifring oder etwas Ähnlichem von unten her vom Kern 142 nach oben abgehoben werden und sodann mittels eines Vakuums in die Aufnahme 12 hineingezogen werden.

Die Vorrichtung 140 unterscheidet sich von den zuvor beschriebenen Vorrichtungen ferner durch die Vorsprünge 146, die hier durch sattelartig hervorspringende Schienen gebildet sind. Die Schienen erstrecken sich im wesentlichen parallel zur Längsmittelachse 64 der Aufnahme 12. Schließlich besitzt die Vorrichtung 140 nur zweite Sperrelemente 148, 150, die von unten unter den unteren Rand 151 der Cremedose 16 greifen, wenn diese in die Aufnahme 12 hineingezogen ist. Dies entspricht der Position der zweiten Sperrelemente 48, 50, 52, wie sie in Fig. 1 dargestellt ist.

Jedes der zweiten Sperrelemente 148, 150 weist einen Kanal 152 auf, durch den Kühlluft direkt zu den Innenseiten 20, 26 der Cremedose 16 geführt wird. Die Kühlluft wird hier also sowohl von oben als auch von unten in die Aufnahme 12 eingeblasen. Infolgedessen erreicht sie die Innenseiten 20, 26 der Cremedose 16 bei diesem Ausführungsbeispiel mit einer geringeren, noch nicht vorgewärmten Temperatur. Im übrigen entspricht die Funktion der Vorrichtung 140 jedoch der Vorrichtung gemäß Fig. 1.

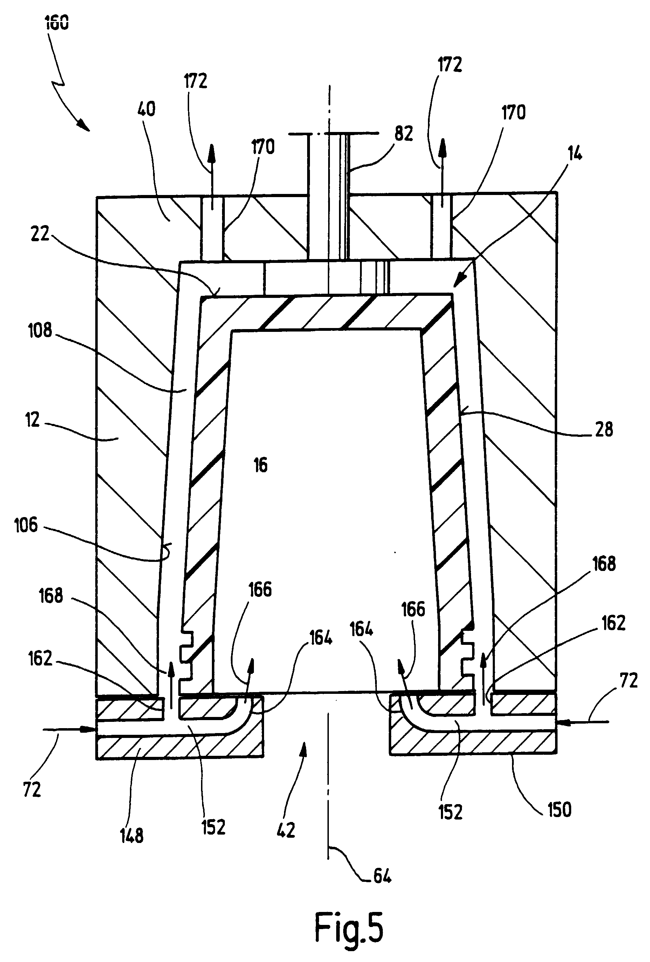

In Fig. 5 ist eine erfindungsgemäße Vorrichtung insgesamt mit der Bezugsziffer 160 bezeichnet. Die Vorrichtung 160 unterscheidet sich von der Vorrichtung 140 gemäß Fig. 4 vor allem dadurch, daß die Kühlluft vollständig von unten, d.h. von der Seite der Einführöffnung 42 her, in die Aufnahme 12 eingeblasen wird. Aus diesem Grund weisen die zweiten Sperrelemente 148, 150 jeweils zwei Lufteinlässe 162, 164 auf, aus denen die Kühlluft in Richtung der Pfeile 166, 168 in die Aufnahme 12 einströmt. Am Boden 40 der Aufnahme 12 sind demgegenüber zwei Auslässe 170 angeordnet, über die die eingeblasene Kühlluft mit Hilfe eines Unterdrucks in Richtung der Pfeile 172 abgesaugt wird. Hierdurch wird die Druckdifferenz und damit die Strömungsgeschwindigkeit der Kühlluft gesteigert.

Abweichend von dieser Darstellung kann die Kühlluft in anderen Ausführungsbeispielen der Erfindung auch von anderen Positionen der Aufnahme 12 her eingeblasen und ggf. über Auslässe 170 an einem anderen Ende abgesaugt werden.

In weiteren, hier jedoch nicht dargestellten Ausführungsbeispielen der Erfindung ist die Innenwand 106 der Aufnahme 12 alternativ oder ergänzend zu den Zapfen 100 bis 104 oder dem Zug 122 durch Riefen, Nuten, Löcher oder ähnliches strukturiert, was ebenfalls eine Verwirbelung der einströmenden Kühlluft bewirkt.

In einem weiteren Ausführungsbeispiel der Erfindung ist die Aufnahme 12 Bestandteil des Formwerkzeugs der Kunststoff-Spritzgießmaschine, d.h. sie bildet einen Teil des Formhohlraums. In diesem Fall wird mit dem Einblasen des Kühlmediums bevorzugt dann begonnen, wenn der eigentliche Formvorgang des Kunststofferzeugnisses, d.h. der Einspritzvorgang, beendet ist.

## Patentansprüche

1. Vorrichtung zum Handhaben eines Kunststofferzeugnisses (16) bei oder nach dessen Entnahme aus einem Werkzeug (144) einer Kunststoff-Spritzgießmaschine, mit Haltemitteln (12, 80; 12) zum Festhalten des Kunststofferzeugnisses (16) und mit Kühlmitteln (70 - 76, 90, 92; 162, 164) zum Kühlen eines ersten Oberflächenabschnitts (22, 28) davon, wobei die Haltemittel (12, 80; 12) eine Aufnahme (12) mit einer Innenwand (106) beinhalten, die das Kunststofferzeugnis (16) umgibt, dadurch gekennzeichnet, daß die Haltemittel (12, 80; 12) das Kunststofferzeugnis (16) mit einem definierten Freiraum (108) zwischen der Innenwand (106) und dem ersten Oberflächenabschnitt (22, 28) halten und daß die Kühlmittel (70 - 76, 90, 92; 162, 164) einen Mediumstrom (72; 166, 168) beinhalten, der in dem Freiraum (108) an dem ersten Oberflächenabschnitt (22, 28) entlang geführt ist.

2. Vorrichtung nach Anspruch 1, dadurch gekennzeichnet, daß die Aufnahme (12) das Kunststofferzeugnis (16) vollständig umgibt.

3. Vorrichtung nach Anspruch 1 oder 2, dadurch gekennzeichnet, daß die Aufnahme (12) jeweils nur ein einzelnes Kunststofferzeugnis (16) umgibt.

4. Vorrichtung nach einem der Ansprüche 1 bis 3, dadurch gekennzeichnet, daß die Aufnahme (12) bewegliche Sperrelemente (44 - 54; 148, 150) aufweist, um das Kunststofferzeugnis (16) gegen ein Herausbewegen aus der Aufnahme (12) zu sichern.

5. Vorrichtung nach einem der Ansprüche 1 bis 4, dadurch gekennzeichnet, daß sie Teil eines Entnahmewerkzeugs (140) zum Entformen des Kunststofferzeugnisses (16) aus einem Formhohlraum der Kunststoff-Spritzgießmaschine ist.

6. Vorrichtung nach einem der Ansprüche 1 bis 5, dadurch gekennzeichnet, daß die Aufnahme (12) Teil eines Formhohlraums einer Kunststoff-Spritzgießmaschine ist.

7. Verfahren zum Handhaben eines Kunststofferzeugnisses (16) bei oder nach dessen Entnahme aus einem Werkzeug (144) einer Kunststoff-Spritzgießmaschine, mit den Schritten:
- Festhalten des Kunststofferzeugnisses (16) in einer Aufnahme (12) mit einer Innenwand (106), die das Kunststofferzeugnis (16) umgibt, und
- Kühlen eines ersten Oberflächenabschnitts (22, 28) des Kunststofferzeugnisses (16) mit Kühlmitteln (70 - 76, 90, 92; 162, 164),
dadurch gekennzeichnet, daß das Kunststofferzeugnis (16) mit einem definierten Freiraum (108) zwischen der Innenwand (106) und dem ersten Oberflächenabschnitt (22, 28) gehalten wird und daß in dem Freiraum (108) ein Mediumstrom (72; 72, 124, 126; 166, 168) an dem ersten Oberflächenabschnitt (22, 28) entlang geführt wird.

8. Verfahren nach Anspruch 7, dadurch gekennzeichnet, daß der Mediumstrom (72; 72, 124, 126; 166, 168) mit Überdruck an dem ersten Oberflächenabschnitt (22, 28) entlang geführt wird.

9. Verfahren nach Anspruch 7 oder 8, dadurch gekennzeichnet, daß die Größe des definierten Freiraums (108) mit einer Abstandsregelung (86, 106) eingestellt wird.

10. Verfahren nach einem der Ansprüche 7 bis 9, dadurch gekennzeichnet, daß der Mediumstrom (72; 72, 124, 126) anschließend über einen zweiten Oberflächenabschnitt (20, 26) des Kunststofferzeugnisses (16) weitergeleitet wird.

11. Verfahren nach einem der Ansprüche 7 bis 10, dadurch gekennzeichnet, daß der Mediumstrom (72) verwirbelt wird.

12. Verfahren nach einem der Ansprüche 7 bis 11, dadurch gekennzeichnet, daß das Kunststofferzeugnis (16) in der Aufnahme (12) stabilisiert wird.

13. Verfahren nach einem der Ansprüche 7 bis 12, dadurch gekennzeichnet, daß der Mediumstrom (72, 124, 126) spiralförmig um das Kunststofferzeugnis (16) herumgeführt wird.

14. Verfahren nach einem der Ansprüche 7 bis 13, dadurch gekennzeichnet, daß das Kunststofferzeugnis (16) beim Entformen aus einem Formhohlraum der Kunststoff-Spritzgießmaschine gekühlt wird.
